# EUROPEAN PATENT APPLICATION

(11) **EP 1 849 369 A2**
(43) Date of publication of application: **31.10.2007**
(21) Application number: 07380117.7
(22) Date of filing: 27.04.2007
(51) Int. Cl.: A23L 1/325, A23B 4/06

(54) **Process for packaging canned fish and product obtained thereby**

(30) Priority: 28.04.2006 ES 200601108
(71) Applicant: Jealsa Rianxeira, S.A., 15930 Boiro La Coruña (ES)
(72) Inventor: Duran Vila, Salvador, c/o Jealsa Rianxeira, S.A., 15930 Boiro (a Coruna) (ES); Lopez Outeiral,José C.,c/o Jealsa Rianxeira,S.A., 15930 Boiro (a Coruna) (ES)
(74) Representative: Carpintero Lopez, Francisco

(57) **Abstract**

The invention relates to a process for packaging canned fish and the product obtained thereby, comprising the steps of elaborating a raw or cooked fish block by means of filling a plurality of molds with fish loins, pressing and freezing said fish blocks, demolding the fish blocks and thawing them, feeding the fish blocks to first cutting means to obtain a plurality of fish strips, each of which has a thickness E1, feeding each of the fish strips to second cutting means to obtain a plurality of fish portions by a double pass, rearranging the fish portions in groups of M layers of N fish portions each, packaging the groups in a pack formed from a flexible laminar material.

## Description

### FIELD AND OBJECT OF THE INVENTION

The present invention is comprised in the canning industry field, and more specifically it relates to a process for packaging fish to keep it preserved in the packaged container for a certain time period, as well as to the product obtained by means of the mentioned process.

### STATE OF THE ART

Different processes for packaging fish are currently known, which processes start from a certain amount of fish and in which said fish is treated to be introduced in a container which is later closed.

To date, the applicant is only aware of fish preservation in metal containers, such as cans, or in glass containers, which have a high production cost in the case of metal containers and have handling problems in the case of glass containers due to the fragility of glass, the containers frequently breaking with the economic loss involved.

Due to the foregoing, a need has been detected to provide a process for packaging allowing fish preservation in containers formed from a three-layer laminar material.

This objective is reached by means of the invention as it is described in claim 1; the dependent claims define preferred embodiments of the invention.

### DESCRIPTION OF THE INVENTION

A first aspect object of the present invention relates to a process for packaging canned fish characterized in that it comprises the following steps:
a).- Elaborating a raw or cooked fish block by means of filling a plurality of molds with fish loins,
b).- Pressing and freezing said fish blocks,
c).- Demolding the fish blocks and thawing them,
d).- Feeding the fish blocks to first cutting means to obtain a plurality of fish strips, each of which has a thickness E1,
e).- Feeding each of the fish strips to second cutting means to obtain a plurality of fish portions by a double pass,
g).- Rearranging the fish portions to form groups of M layers of N fish portions each,
h).- Packaging the groups of fish portions in a pack formed from a flexible laminar material.

In this manner and thanks to the specific way of handling fish described in the present process, the fish can be introduced in a flexible pack without breaking during its handling, said fish being divided into small portions which due to their shape and dimensions can be adapted to the specific shape of the pack of laminar material in which they will finally be introduced.

The following steps can be carried out after packaging step h):
i).- Adding the coating liquids for fish preservation,
j).- Closing the packs to form the end product
k) - Feeding the end product units in autoclave carts,
l) - Sterilizing the end product units.

Correct fish preservation is achieved for a certain specified time period thanks to the mentioned steps.

Two-part aluminium molds with a substantially parallelepiped shape can be used in fish block elaborating step a), it being possible to use molds of different materials and with different shapes.

For its part, pressing and freezing step b) can be carried out using plate cabinets, the pressure exerted being between 90 and 100 kg and the freezing temperature reached being between -23° and -25°, the frozen fish blocks later being temporarily stored in freezing chambers.

The first cutting means used in step d) may consist of a band saw, although another equivalent means may also be used. This step will advantageously be carried out using a range between -5° and -8°C as working temperatures. The second cutting means used in step e) may further consist of a high-pressure water cutting system, the water being projected at a working pressure between 2800 and 3000 bar through a hole with a diameter between 0.08 mm and 0 mm. This high-pressure water cutting system is ideal for cuts of this type in which the cutting tolerances and wastage are as small as possible.

The fish portions obtained in step e) can have a parallelepiped section, the sides of which have lengths E2 and E3. The thickness E1 of the strips obtained in step d) can be equal to the mentioned dimensions E2 and E3 of the fish portions. This shape is not limiting, the fish portions adopting during the cutting operations a shape such that it allows the ordered layered arrangement of the different fish portions and optimization of the space occupied by such portions inside the pack in each case.

The pack used in step h) can have a substantially parallelepiped shape to thus optimize the space given that the fish portions have a rectangular parallelepiped shape once they are rearranged.

As regards the laminar material used to construct the pack, it can comprise at least one outer layer of cellulose material, one intermediate layer of insulating material and one inner layer of impermeable material, said circumstance by no means being limiting, said laminar material being cardboard, plastic or any other material which can be used to contain foodstuffs therein.

A second aspect of the present invention relates to a product obtained by means of the process described above, said product being characterized in that it comprises a plurality of fish portions, each of which has dimensions E1 x E2 x E3, which portions are grouped in M layers of portions by N portions that each layer has, said fish portions being contained inside a container formed from a flexible laminar material.

Canned fish is thus achieved which is contained in a manner and in a laminar material support allowing the manufacturing cost thereof to be lower.

### DESCRIPTION OF THE DRAWINGS

A series of drawings is very briefly described below which aid in better understanding the invention and which are expressly related to several embodiments of said invention which are set forth as illustrative and nonlimiting examples thereof.

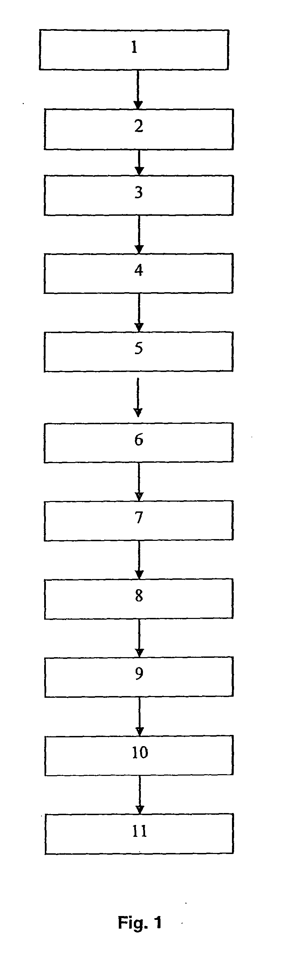

Figure 1 shows a flow chart with the different operations forming part of the process for packaging canned foodstuff object of the present invention.
Figure 2 shows a perspective view of the end product obtained by means of the process for packaging canned foodstuff object of the present invention, in which a partial section has been carried out to see the internal content thereof.

### DESCRIPTION OF A PREFERRED EMBODIMENT OF THE INVENTION

According to the first object of the present invention, the first step to be carried out consists of elaborating a fish block (1), starting from a base with set dimensions and a regular shape, in the present embodiment of the invention, a tuna parallelepiped (hereinafter fish block) has been chosen for use thereof to automate the process and obtain fish portions as the end product, which portions in this case take the form of cubes or dices with set measurements. The expected raw material are parallelepiped frozen tuna fish blocks the sides of which are equivalent to 1440 cube units (with an 18.5 mm side), which means a total of 36 groups of 40 "cubes" each.

The theoretical wastage of the cuts established in experimental studies and tests must be added to these measurements.

Several studies on the cutting and selection of the suitable mold for optimizing the dimensions have been carried out to determine the fish block measurements.

Once the molds are filled with a weight of 9.80 kg of tuna loins, the second step (2) is carried out, consisting of pressing them in plate cabinets and storing them in chambers at -23°C. As regards the cooling time, it has been established according to the minimum residence time which allows obtaining the temperature required in a conventional cutting process (-23° to -25°C), these cabinets work at a working pressure of 90 - 100 kg.

After the pressing and freezing process (2) (in plate cabinets or the like), the fish will adopt the shape of said mold obtaining what is commercially called fish block. The variables which will need to be determined at this point are: weight (manageability), dimensions (considering the subsequent wastage) and process quality. In the same manner, it is also necessary to define the processing times. The orientation of the loins used, as well as an upper limit of crumbs and pieces to be used, has also been determined as an extremely important parameter.

During the mentioned freezing step, there is a growth of 3.5 ± 0.5 mm in the fish block, the height of the fish block being 72.0 ± 2.0 mm. The reason for this expansion is due to the change of state of the internal water between fish myotomes to ice; due to the fact that the other faces of the mold do not have any deformation, the entire process affects the upper face.

A third step (3) is then carried out in which the fish block is simultaneously demolded and partially thawed, this process being referred to as the attemperation process, ensuring at this point that the fish block temperature is between -5° and -8°C, this temperature being very important for the subsequent cutting steps.

The first block cutting step (4) is then carried out using a band saw, supporting the block on its larger face and cutting the tuna in 18.5 mm x 370.0 mm strips. The design of the machine allows automatically and continuously adjusting the thickness of each strip, the entire process being controlled by means of software. The objective of this adjustment is the possibility of using 100% of the tuna block, even though its larger dimension is not exactly the suitable dimension, and also being able to compensate the wastage differences in the cutting width of the band according to different temperatures, variable hardnesses of the raw material, wearing in the cutting bands or different cutting band models.

The design of the cutting system is based on a suitable dimensional and compactness quality of the entering fish blocks. The outer faces of the fish blocks will be the faces of the outer cubes, unused trims or parts not being expected. As regards the optimal temperature for the conventional cutting, the range established, as mentioned above, between -5°C and -8°C is established as the working range.

The second cutting step (5) is then carried out. At this point, it is necessary to carry out a series of tests that reliably determine the suitability as regards the use of cutting methods, such as waterjet cutting, for cutting fish strips with a height of approximately 18.5 millimeters into perfect cubes with an 18.5 mm side for their subsequent dosing into the corresponding pack.

The ultra high pressure intensifying pumps increase the water pressure to high values between 2,800 and 3,000 bar and lead it through a hole with a diameter from 0.08 mm to 0.45 mm, thus generating a waterjet at a speed of almost 1,000 meters per second which allows cutting the tuna with very low wastage.

Once the cubes have been cut, the rearranging step (6) for rearranging such cubes commences, it being necessary for this embodiment to group such cubes into two superimposed rows of 20 cubes each (4x5); this will be the final group in the pack to determine the end product which will comprise a total of 40 fish portions or cubes.

Other configurations as regards the number of portions and arrangement thereof can additionally be defined, for example fish fingers or fillets, being able to adopt infinite combinations in the number of units to be introduced in the pack:

| **Product** | **length (y)** | **width (x)** | **height (z)** |
|---|---|---|---|
| FISH BLOCK | 370.00 | 343.20 | 74.00 |
| PELLET | 92.50 | 74.00 | 37.00 |
| Fillet*2 | 92.50 | 74.00 | 18.50 |
| Fillet*4 | 92.50 | 37.00 | 18.50 |
| Fillet*8 | 92.50 | 18.50 | 18.50 |
| Fillet*10 | 74.00 | 18.50 | 18.50 |
| Cube | 18.50 | 18.50 | 18.50 |

The actual packaging step (7) is then carried out, consisting of introducing the regroupings of fish portions in their corresponding pack, the regrouping of portions being introduced in two layers by means of an intermediate device pushing the regroupings of fish portions previously deposited in unit conveyors towards the inside of the pack.

The present process is intended to be used in packaged products in which the packs are formed by flexible laminar materials. More specifically and as an example, this embodiment of the invention will specifically use materials formed by several layers, such as for example at least one outer layer of cellulose material, one intermediate layer of insulating material and an inner layer of impermeable layer. For example tetra recart® type packs will be used, which have the property of being able to be introduced in autoclaves to carry out the sterilization of the product contained inside the pack, the internal volume of said pack in this case being approximately 400 ml.

After filling the packs with fish, a new step (8) is carried out incorporating the coating liquid (vegetable oils, brine, sauces, etc.) These ingredients are stored in tanks inside the factories. The addition of coating liquid is a process which is carried out after the fish portions are introduced in the pack, such introduction being carried out such that there is enough head space to obtain a suitable internal vacuum and so that the subsequent closing process can be carried out without problems and in a completely hermetic manner.

Once the coating liquid has been introduced in the pack, the packs are closed (9) in completely automated closing lines, the speeds of which are suitable to the packing speeds, a single closing machine reaching 9,000 packs per hour.

There are several reasons for which it is recommendable to carry out a vacuum inside the packs, one reason is that the positive pressure in the pack increases considerably in the subsequent sterilization process, and although the latter is carried out at overpressure or at least at vapor pressure, such pressure contributes to reducing the pressure generated by the heat inside the packs, reducing the possibility of deformations occurring in the pack. When the sterilization process has ended and the packs are already cool, the internal vacuum created will make said packs have a slightly concave shape.

There are several processes for creating an internal vacuum in a canned foodstuff pack, one of which carries out the closing operation in a closing machine under vacuum or injecting an amount of vapor on the can before the closing occurs, thus achieving that the head space occupied by the vapor reduces the volume it occupied when said vapor cools and condenses, causing the vacuum. In this case the selected option is the second option.

The packs reach the closing machine through a conveyor belt mentioned in the previous section. The preformed packs (joined at the side seam) are manually introduced through another automatic feeder of the closing machine and it will only be necessary to close them at the lower part before filling them and at the upper part once the fish and the coating liquids are dosed. These covers will have been previously marked with the expiration date, batch number or any other desired inscription by means of an ink injector on the surface of the material.

Once the cans are closed, they are introduced in autoclaves (10) for their sterilization (11). The main objective of the heat treatment is to destroy or inactivate the germs capable of producing toxins or altering the canned foodstuff, but it especially intends to prevent the growth of *Clostridium botulinum,* a bacterium which can produce a highly lethal toxin and the spores of which are very heat-resistant, surviving at temperatures greater than 100°C. Enzymes are generally inactivated at quite low temperatures but many types of bacteria, especially spore-generating bacteria, are resistant to relatively high temperatures for considerable time periods. The heat resistance of the microorganisms depends on several factors, one of which is the acidity of the medium: the more acidic the medium the lower the heat resistance and vice versa.

But simply destroying the microorganisms is insufficient; the effects of heat on the nutritive components of the processed fish products must also be considered. Thus, for example, high temperatures cause the destruction of a large amount of vitamins.

The sterilization process must therefore be very controlled, adapting the sterilization times and temperatures to the product and presentation format, thus ensuring the indefinite stability of the packaged product, making the canned foodstuff non-perishable. The treatment time decreases as the temperature thereof increases, the sterilization temperature used in this process being 121°C. In any case, it is extremely important to know and study the rate of heat penetration into the packaged product; therefore sterilization tests must be carried out during the process with sophisticated equipment especially designed for this task. The treatment time and temperature must always be indicated by said sterilization tests, thus maximally optimizing the process with a sufficient safety margin and ensuring the nutritional quality of the product launched on the market as much as possible. Factors such as the initial different state of the matter, and other phenomena that may affect heat penetration, such as the distribution of cans in the baskets, can be prevented with this safety margin. The parameters which have previously been tested successfully must be rigorously maintained.

The two features conferred to the canned foodstuff by the sterilization heat treatment, hygiene and stability, are not modified while the pack remains hermetically closed.

The carts with the already closed packs are first introduced in the autoclaves. This feeding process is completely automated through conveyor belts. In the present case, the autoclaves are horizontal, the packs are in carts with wheels and are also introduced in an automated manner. The position in the cart for sterilization will be carried out with the pack placed sideways and supported on the side seam to prevent it from receiving the direct waterjet during the cooling process, which waterjet could damage the pack and/or weaken it for its subsequent handling.

The packs are cooled at the end of the sterilization process, which cooling must be quick but progressive to prevent a thermal shock or a sudden pressure drop; it is carried out inside the autoclave and at overpressure to prevent pack deformations, as there is a high pressure inside said packs because the product is at temperatures similar to those of the sterilization process itself. This cooling has two purposes:

In some cases and when it has been so established in the heat treatment process, cooling prevents the fish from being excessively cooked by the residual heat.

On the other hand, it will prevent breakages and alterations of the texture of the canned foodstuff, which could occur if the handling is rough, when the product is still hot.

In order to ensure that the cooling time and conditions are suitable for the product and format and that the latter will allow carrying out the subsequent operations easily, a cooling time that is suitable to the format and the cooling means (water or air) will be used. The possibility of manually handling the recently sterilized product can be established as the correct cooling criterion.

The process object of claim 1 can be used not only in canned foodstuff but in quick-frozen, refrigerated foodstuffs or precooked foodstuffs.

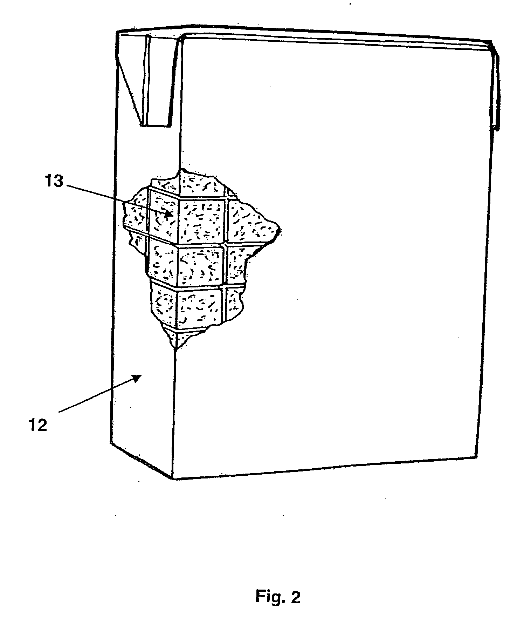

Figure 2 shows an embodiment in which 20 shows a tetra recart ⓒ pack (12) inside which a plurality of fish portions are located in a completely ordered manner, which fish portions will be cubes (13) in this particular case .

## Claims

1. A process for packaging canned fish **characterized in that** it comprises the following steps:
a).- Elaborating a raw or cooked fish block by means of filling a plurality of molds with fish loins,
b).- Pressing and freezing said fish blocks,
c).- Demolding the fish blocks and thawing them,
d).- Feeding the fish blocks to first cutting means to obtain a plurality of fish strips, each of which has a thickness E1,
e).- Feeding each of the fish strips to second cutting means to obtain a plurality of fish portions by a double pass,
g).- Rearranging the fish portions to form groups of M layers of N fish portions each,
h).- Packaging the groups of fish portions in a pack formed from a flexible laminar material.

2. A process for packaging according to claim 1, **characterized in that** the following steps are carried out after packaging step h)
i).- Adding the coating liquids for fish preservation,
j).- Closing the packs to form the end product
k).- Feeding the end product units in autoclave carts,
l).- Sterilizing the end product units.

3. A process for packaging according to any of the previous claims, **characterized in that** two-part aluminium molds with a substantially parallelepiped shape are used in fish block elaborating step a).

4. A process for packaging according to any of the previous claims, **characterized in that** pressing and freezing step b) is carried out using plate cabinets, the pressure exerted being between 90 and 100 kg and the freezing temperature reached being between -23° and -25°, the frozen fish blocks later being temporarily stored in freezing chambers.

5. A process for packaging according to any of the previous claims, **characterized in that** the first cutting means used in step d) consist of a band saw, the working temperature being between -5° and -8°C.

6. A process for packaging according to any of the previous claims, **characterized in that** the second cutting means used in step e) consist of a high-pressure water cutting system, the water being projected at a working pressure of at least 2800 bar through a hole with a diameter between 0.08 mm and 0.45 mm.

7. A process for packaging according to any of the previous claims, **characterized in that** the fish portions obtained in step e) have a parallelepiped section, the sides of which have lengths E2 and E3.

8. A process for packaging according to any of the previous claims, **characterized in that** E1=E2=E3.

9. A process for packaging according to any of the previous claims, **characterized in that** the pack used in step h) is a substantially parallelepiped pack.

10. A process for packaging according to any of the previous claims, **characterized in that** the laminar material used comprises at least one layer of cellulose material, one intermediate layer of insulating material and one inner layer of impermeable material.

11. A process for packaging according to any of the previous claims, **characterized in that** during rearranging step I), the sterilization of the product is carried out at a temperature between 115° - 121 °C for a time between 45 - 360 minutes.

12. A product obtained by means of the process according to claims 1 to 11, **characterized in that** it comprises a plurality of fish portions, each of which has dimensions E1 x E2 x E3, which portions are grouped in M layers of portions by N portions that each layer has, said fish portions being contained inside a container formed from a flexible laminar material.
